# EUROPÄISCHE PATENTSCHRIFT

(11) **EP 1 001 095 B1**
(45) Veröffentlichungstag und Bekanntmachung des Hinweises auf die Patenterteilung: **08.01.2014**
(21) Anmeldenummer: 99122272.0
(22) Anmeldetag: 09.11.1999
(51) Int. Cl.: E03C 1/084

(54) **Wasserstrahlbelüfter**
Water aerator
Aérateur d'eau

(30) Priorität: 13.11.1998 DE 19852411
(43) Veröffentlichungstag der Anmeldung: 17.05.2000
(60) Teilanmeldung: 10183933.0
(73) Patentinhaber: Hansgrohe SE, 77761 Schiltach (DE)
(72) Erfinder: Flieger, Horst, 77761 Schiltach (DE)
(74) Vertreter: Patentanwälte Ruff, Wilhelm, Beier, Dauster & Partner

(56) Entgegenhaltungen:
- EP-A- 0 268 844
- EP-A- 1 036 889
- EP-A1- 0 443 538
- WO-A-95/06787
- DE-A1- 3 700 927
- FR-A- 2 392 182
- US-A- 3 270 965
- US-A- 5 730 361

## Beschreibung

Die Erfindung betrifft ein Wasserstrahlbelüfter zum Anschluss an eine Sanitärarmatur nach dem Oberbegriff von Anspruch 1. Insbesondere entspricht Dokument EP0151998 dem Oberbegriff des Anspruchs 1.

Derartige Wasserstrahlbelüfter, die auch als Strahlregler bezeichnet werden, haben eine Wassereintrittsöffnung und eine Wasseraustrittsöffnung sowie zwischen Wassereintrittsöffnung und Wasseraustrittsöffnung angeordnete Einrichtungen zur Zerlegung des in den Wasserstrahlbelüfter einströmenden Wassers und zu dessen Vermischung mit angesaugter Luft. Wasserstrahlbelüfter sind heute vielfach gebräuchlich, weil ein belüfteter Wasserstrahl nicht spritzt und ein geräuscharmes Zufliessen von Wasser ermöglicht. Ausserdem kann zum Beispiel beim Händewaschen die Wassermenge reduziert werden, ohne dass sich dies auf die Reinigungsleistung nachteilig auswirkt.

Die Einrichtungen zur Zerlegung und Vermischung des einströmenden Wassers mit angesaugter Luft arbeiten normalerweise in mehreren Stufen. Zunächst wird das einströmende Wasser durch eine Einrichtung zur Erzeugung von Einzelstrahlen aufgeteilt. Hierzu sind normalerweise eine oder mehrere übereinander an-geordnete Lochplatten vorgesehen, wobei die Löcher normalerweise gegeneinander versetzt sind. In Strömungsrichtung nachfolgend befindet sich normalerweise ein freier Raum bzw. eine Kammer mit der Möglichkeit für Luftzutritt von außen, so daß hier Luft nach dem Prinzip einer Wasserstrahlpumpe angesaugt werden kann. Die Einzelstrahlen werden dann in mindestens einer in Strömungsrichtung nachgeschalteten Zerlege- und Mischeinrichtung zerlegt und mit der angesaugten Luft vermischt.

Insbesondere bei den Einrichtungen zur Zerlegung und Vermischung der Einzelstrahlen mit Luft bestehen zwischen gebräuchlichen Wasserstrahlbelüftern große Unterschiede. Bei vielen sind zu diesem Zweck Siebanordnungen von mehreren feinteiligen, übereinander angeordneten Sieben vorgesehen, durch die der Strahl zerlegt und die Vermischung mit Luft bewirkt wird. Diese neigen jedoch zur Verstopfung durch Verkalkung. Zur Verminderung des Verkalkungsproblemes sind auch schon Einrichtungen vorgeschlagen worden, die frei von solchen Sieben sind.

Ein aus der EP 0 151 998 bekannter, siebfreier Wasserstrahlbelüfter hat unterhalb der Einzelstrahl-Erzeugungseinrichtungen und der Luftkammer mehrere konzentrische, treppenförmige Einrichtungen zur Zerlegung der Einzelstrahlen unter gleichzeitiger Vermischung mit Luft, an die sich konzentrische Führungskanäle anschließen, die zur Beruhigung und Stabilisierung des Wasser/Luftgemisches dienen. Dabei besitzen die Führungskanäle gemeinsame Trennwände, die durch konzentrische Hülsen gebildet werden, deren Höhe von innen nach außen zunimmt und die im Querschnitt nach Art von Stufenpyramiden ausgebildet sind, d.h. nach beiden Seiten treppenförmig verlaufen. Diese geometrisch relativ komplexe Struktur zeigt wenig Verkalkungsbereitschaft und ermöglicht die Bildung eines gleichmässig belüfteten Vollstrahles.

Bei einen aus der DE 196 42 055 bekannten, siebfreien Strahlregler wird dem Problem der Verkalkung dadurch begegnet, dass zur Zerlegung der Einzelstrahlen und deren Vermischung mit Luft eine in Strömungsrichtung mehrlagige Anordnung von quer zur Strömungsrichtung orientierten Stiften vorgesehen ist, die parallel zueinander verlaufen. Dadurch werden Kreuzungspunkte vermieden, die bei herkömmlichen Siebstrukturen als bevorzugte Stellen für Wasseransammlung und nachfolgende Kalkbildung wirken.

Aus der US 3,270,965 ist ein kalkabweisender Wasserstrahlbelüfter aus Kunststoff bekannt.

Gegenstand der EP 0 268 844 A1 ist ein Auslaufmündstück für Sanitär-armaturen, wobei im Bereich der Wasseraustrittsöffnung quer zur Wasserströmung ein oder mehrere Siebe angeordnet sind, die aus Kalkablagerungen abstoßendem Material hergestellt sein können.

Die WO 95/06787 A1 betrifft eine Siebanordnung, welche mindestens ausflussseitig mehrere feinmaschige Kunststoffgewebe aufweist, wobei die Kunststoffgewebe vom Wasser in Schwingung versetzt werden und dadurch das Ansetzen und Ablagern von Kalk verhindern.

In der FR 2 392 182 A1 werden Wasserstrahlbelüfteraus diversen Kunststoffmaterialien wie beispielsweise Polyformaldehyd oder Polyoxymethylen beschrieben.

Aus der EP 1 036 889 A1 geht ein Wasserstrahlbelüfter mit einer kalkabweisenden Oberflächenbeschichtung hervor.

In der US 5,730,361 wird ein Brausekopf einer Handbrause mit einer Strahlscheibe offenbart, welche vollständig und einstückig aus einem elastischen Material besteht.

In der DE 37 00 927 A1 wird eine Duscharmatur mit Rohrzapfen beschrieben, welche mit einem weichelastischen Material beschichtet sind.

Gegenstand der EP 0 443 538 A1 ist ein Brausekopf mit kappenförmig abgrundeten Düsenvorsprüngen aus einem gummielastischen Material einer Shore-Härte von etwa 40 bis 50.

Der Erfindung liegt die Aufgabe zugrunde, gattungsgemässe Wasserstrahlbelüfter hinsichtlich ihres Verkalkungsverhaltens weiter zu verbessern.

Erfindungsgemäss wird diese Aufgabe durch einen Wasserstrahlbelüfter mit den Merkmalen von Anspruch 1 gelöst. Unter einer weichen Oberfläche werden insbesondere solche Oberflächen verstanden, die durch äusseren Druck leicht, insbesondere reversibel verformbar sind, also bevorzugt elastisch nachgiebige Oberflächen. Wasserabstossend im Sinne der Erfindung ist eine Oberfläche dann, wenn sie aufgrund ihrer chemischen und/oder physikalischen Eigenschaften und/oder ihrer Struktur von Wasser nur schlecht benetzt wird, also gegenüber Wasser eine hohe Grenzflächenenergie aufweist.

Die Erfindung geht einen vom Stand der Technik grundsätzlich abweichenden Lösungsweg, indem nicht oder nicht nur versucht wird, durch eine bestimmte geometrische Anordnung von Bauelementen und/oder deren zweckgerichtete Formgebung die Verkalkungssicherheit zu erhöhen, sondern indem in besonderem Maß Oberflächeneigenschaften von Bauteilen beeinflusst werden, die sich im besonders verkalkungsgefährdeten Bereich der Wasseraustrittsöffnung befinden. Wird ein Wasserhahn oder dergleichen abgestellt, dann bleibt normalerweise Restwasser an Bauelementen im Bereich der Wasseraustrittsöffnung hängen und verdunstet langsam, wobei normalerweise ein Kalkrest an der Haftstelle des verdunsteten Tropfens zurückbleibt. Die dadurch herrührende Verkalkung tritt schwerkraftbedingt besonders im Bereich des Austrittsendes auf, das sich langsam zusetzen kann.

Nach dem erfindungsgemässen Vorschlag kann mindestens der Bereich des Austrittsendes dadurch kalkabweisend ausgebildet sein, dass an den gefährdeten Oberflächen entweder Wassertropfen überhaupt nicht oder nur in geringem Umfang bzw. mit geringen Volumina hängen bleiben oder aber deren Kontaktfläche mit dem Bauelement so klein ist, dass nur quasi punktförmige Kalkreste zurückbleiben. Je nach Oberflächenbeschaffenheit kann alternativ oder zusätzlich bei weichen Oberflächen möglicherweise abgelagerter Kalk durch leichtes Verformen bzw. Verbiegen der Bauelemente-Oberfläche entfernt und abgelöst werden. Es kann also einerseits Kalkbildung von vorneherein vermieden oder minimiert werden und es können alternativ oder zusätzlich leichtere Reinigungsmöglichkeiten für verkalkte Elemente im Bereich der Wasseraustrittsöffnungen geschaffen werden.

Da die Erfindung sich im Wesentlichen auf die Oberflächeneigenschaften von Strahlführungselementen und/oder Strahlhindernissen im Bereich der Wasseraustrittsöffnung bezieht, kann die Erfindung nutzbringend bei allen Wasserstrahlbelüftern genutzt werden, wobei ggf. deren bzgl. der Verkalkung und/oder anderer Eigenschaften optimierte Geometrie weitgehend oder vollständig beibehalten werden kann. Bevorzugt ist die Erfindung bei siebfreien Strahlbelüftern bzw. Strahlreglern verwirklicht.

Das mindestens eine Bauelement, zumindest im Bereich der Wasseraustrittsöffnung, weist eine Beschichtung bzw. einen Überzug aus einem weichen und/oder wasserabstossenden Material auf. Diese Beschichtung kann auf einen Trägerkörper aufgebracht sein, dessen mechanische Eigenschaft die Volumeneigenschaften des Bauelementes, wie Steifigkeit oder dergleichen, wesentlich bestimmen, während die Beschichtung die gewünschten Oberflächeneigenschaften schafft. Besonders bevorzugt sind wasserabstossende Beschichtungen mit hydrophoben Kunststoffen, beispielsweise Silikon oder Polytetrafluorethylen, die beispielsweise durch Aufsprühen oder Tauchen oder andere geeignete Verfahren auf die Trägerstruktur aufbringbar sind.

Primär wasserabstossende Überzüge können sehr dünn sein und werden damit die Geometrie der Trägerstruktur in der Regel nur unwesentlich verändern. Bevorzugte Schichtdicken können hier kleiner als 0,1 mm sein, insbesondere zwischen ca. 1 und ca. 10 µm liegen. Bei einer Beschichtung mit einem primär weichen Material ist vorzugsweise darauf zu achten, dass die Schichtdicke der Beschichtung derart bemessen ist, dass die Schicht in sich bewegbar, insbesondere zusammendrückbar ist, um das Abplatzen von Kalkresten durch Druck auf die Schicht zu fördern. Hier können Schichtdicken von mehr als 0,1 mm, insbesondere zwischen 0,2 und 0,4 mm, zweckmässig sein. Da bei Beschichtungen die Volumeneigenschaft des Bauelementes, wie dessen Steifigkeit, im wesentlichen durch das Trägermaterial bestimmt sind, kann das Material der Beschichtung, dessen Härte zwischen ca. 20 und ca. 80 Shore A liegt, im unteren Teil dieses Härtebereiches liegen, beispielsweise zwischen ca. 20 und ca. 50 Shore A. Damit reichen schon geringe Abstreifkräfte für eine das Abplatzen von Kalk bewirkenden Verformung aus.

Es ist weiterhin vorgesehen, am Wasseraustritt liegende Kanten von Bauteilen in Wasseraustrittsrichtung spitz auszubilden. Dadurch wird einerseits die Verformbarkeit verbessert und andererseits eine gute Ablösung der Wassertropfen erreicht. Die Schicktdicke der Beschichtung kann an diesen Stellen bis zu 2 mm oder mehr betragen.

Die Vorteile der Erfindung können auch dadurch genutzt werden, dass dem Wasserstrahlbelüfter mindestens ein Bauelement in Form eines im Bereich der Wasseraustrittsöffnung angeordneten oder anordenbaren, durchströmbaren Flächenelementes zugeordnet ist, das eine weiche und/oder wasserabstossende Oberfläche aufweist. Das Flächenelement kann so ausgelegt sein, dass es die Wasseraustrittsöffnung im Wesentlichen über deren gesamten Querschnitt abdeckt und einen unteren Abschluss des Wasserstrahlbelüfters bildet, an dem dann bevorzugt die Restwassersammlung erfolgt. Damit sind weiter innenliegende Bauelemente in der Regel von vorneherein gegen Kalkansammlungen besser geschützt, da Restwasser in der Regel an den am weitesten untenliegenden Teilen hängenbleibt. Gleichzeitig ist auch ein Schutz innenliegender Bauelemente gegen mechanische Beschädigung geschaffen. Bei dem Flächenelement kann es sich insbesondere um ein Gitter mit beliebig gestalteten Wasseraustrittsöffnungen handeln. Es kann sich insbesondere um ein Rechteckgitter, ein Rautengitter oder Wabengitter handeln. Auch spiralförmige oder lochscheibenartige Flächenelemente sind möglich. Das Flächenelement kann zumindest im durchströmbaren Bereich im Wesentlichen vollständig aus weichem und/oder wasserabstossendem Material bestehen oder aber mit solchern Material beschichtet sein. Vorzugsweise ist das Flächenelement als vorzugsweise lösbar mit dem Wasserstrahlbelüfter verbindbarer Einsatz ausgebildet. Ein Flächenelement kann auch fest mit dem Wasserstrahlbelüfter verbunden, beispielsweise in diesem eingespritzt sein.

Bei bevorzugten Ausführungsformen können alle Bauelemente des Strahlbelüfters bzw. Strahlreglers, die mit Wasser in Berührung kommen, wasserabstossende Oberflächeneigenschaften aufweisen, zumindest diejenigen, die auch mit Luft in Berührung kommen und an denen eine Verdunstung von Wasser stattfinden kann.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich allein oder zu mehreren in Kombination miteinander verwirklicht sein. In den Zeichnungen zeigen:
- Fig. 1 :: zwei nebeneinander gezeigte Axialschnitte durch zwei Ausführungsformen erfindungsgemässer Wasserstrahlbelüfter, die bzgl. der Geometrie ihrer Bauelemente im Wesentlichen identisch sind,
- Fig. 2 :: eine vergrösserte Detailansicht des eingekreisten Bereiches II der linken Ausführungsform in Fig. 1,
- Fig. 3 :: eine teilweise gebrochene Seitenansicht einer anderen Ausführungsform eines Wasserbelüfters mit einem im Bereich der Wasseraustrittsöffnung eingesetzten Rundgitter,
- Fig. 4 :: eine vergrösserte Detailansicht des eingekreisten Bereiches IV aus Fig. 3 ohne Gitter, und
- Fig. 5 :: eine vergrösserte, ausschnittsweise Perspektivansicht der Gitterstruktur des Gitters aus Fig. 3.

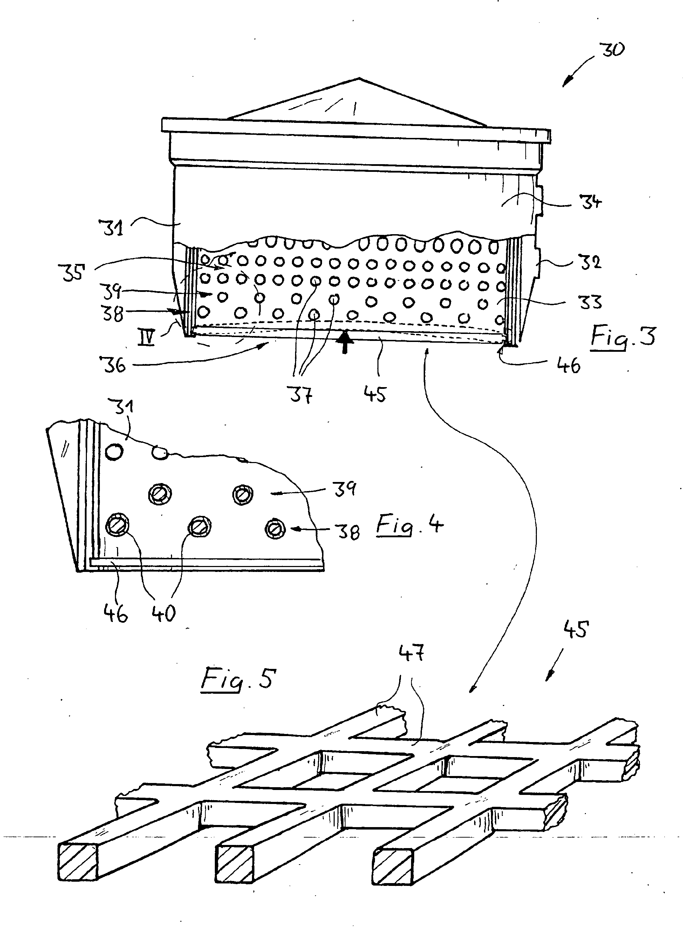

Die in Figuren 3-5 gezeigten Ausführungsformen fallen nicht in den Schutzbereich der Ansprüche.

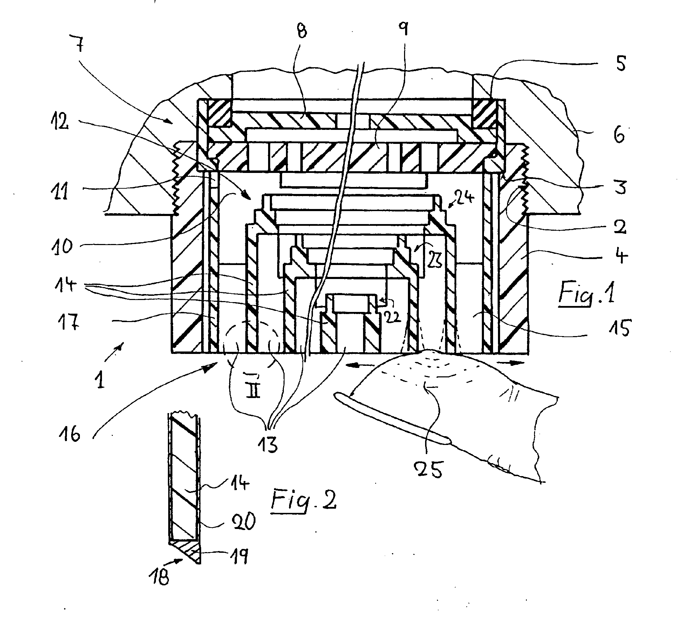

Fig. 1 zeigt in gemeinsamer Darstellung nebeneinander zwei verschiedene Ausführungsformen eines im Wesentlichen zylindrischen Wasserstrahlbelüfters 1, wobei beide Ausführungsformen bzgl. der Geomterie der Bauelemente im Wesentlichen identisch und daher gemeinsam dargestellt sind. Der Wasserstrahlbelüfter ist in an sich bekannter Weise mit einer ein Aussengewinde 2 und eine Anlageschulter 3 aufweisenden Hülse 4 unter Zwischenlegung eines Dichtringes 5 an der Austrittsöffnung eines Wasserhahnes 6 oder eines Zulaufes für eine Badewanne oder dergleichen befestigt. Der Wasserstrahlbelüfter 1 steht beispielhaft für Strahlregler der in der EP 0 151 998 gezeigten Art, wobei deren geometrischen Merkmale bzgl. Anordnung und/oder Dimensionierung einzelner Bauteile bei erfindungsgemässen Wasserstrahlbelüftern im wesentlichen unverändert verwirklicht sein können. Die diesbezüglichen Merkmale werden daher durch Bezugnahme zum Gegenstand der vorliegenden Anmeldung gemacht.

Der Belüfter 1 baut sich in Strömungsrichtung gesehen aus im Wesentlichen vier Funktionseinheiten auf. Es sind dies eine Einrichtung 7 zur Erzeugung von einzelnen Wasserstrahlen, wobei die Einrichtung aus zwei Lochplatten 8 und 9 mit gegeneinander versetzten Löchern besteht, ein darunter befindlicher Luftraum 10, der durch seitliche Öffnungen 11 mit Ansaugluft versorgt wird, mehrere konzentrische, treppenförmige Einrichtungen 12 zur Zerlegung der Einzelstrahlen unter gleichzeitiger Vermischung mit Luft sowie sich daran anschliessende konzentrische Führungskanäle 13. Dabei besitzen die Führungskanäle gemeinsame Trennwände 14 sowie zusätzliche radiale Trennwände 15, die zumindest auslaufseitig so dünn gehalten sind, dass sich die Luft/Wasserströme beim Austritt aus dem Belüfter 1 zu einem einzigen gemeinsamen belüfteten Wasserstrahl vereinigen.

Es sind vier konzentrisch zueinander angeordnete, als Begrenzungs- bzw. Trennwände dienende zylindrische Hülsen 14 und 17 vorgesehen, die im Bereich der Wasseraustrittsöffnung 16 in einer gemeinsamen Austrittsebene für den belüfteten Strahl enden und vier Durchgangskanäle 13 begrenzen, wobei der im Zentrum liegende Kanal zylindrisch und die um diesen herum angeordneten Kanäle als Ringkanäle ausgebildet sind, die durch acht stegartige, radiale Trennwände 15 unterbrochen sind. Die äusserste Hälse bildet den Aussenmantel 17 des Strahlbelüfters mit einem üblichen Aussendurchmesser, die mit einer stufenartigen Erweiterung im oberen Bereich versehen ist, die zur Anlage an die Schulter 3 der Befestigungshülse 4 dient.

Wie in Fig. 2 dargestellt, laufen die in Wasseraustrittrichtung weisenden Unterkanten 18 der Trennwände spitz aus, insbesondere asymmetrisch, wodurch das Abtropfen des Wassers erleichtert wird. Wie dargestellt, ist eine entsprechende spitz auslaufende Unterkante 19 aus dem Material der Beschichtung 20 ausgebildet.

Die Hülsen sind von innen nach aussen zunehmend länger und tragen an ihren oberen Enden ringförmige Aufsätze 22 bis 24, die im Querschnitt nach Art von Stufenpyramiden ausgebildet sind, d.h. nach beiden Seiten treppenförmig verlaufen. Die Treppenaufsätze 22 bis 24, die die Zerlegung der durch die untere Lochplatte gebildeten Einzelstrahlen bewirken, sind axial trichterförmig nach innen gegeneinander versetzt und können daher in kurzen radialen Abständen zueinander angeordnet werden, ohne den Durchflussquerschnitt für das Luft/Wassergemisch zwischen den Aufsätzen zu beeinträchtigen. Die hierdurch mögliche dichte Anordnung von Strahlzerlegungshindernissen 12 in Bezug auf den Querschnitt des Strahlbelüfters fördert die Bildung eines gut belüfteten Vollstrahles über den gesamten Querschnitt des Belüfters. Das in mehreren Kaskaden mehrfach zerteilte Luft/Wassergemisch fliesst durch die konzentrischen Führungskanäle 13 zur Wasseraustrittsöffnung 16 ab.

Der Strahlbelüfter neigt insbesondere aufgrund der glattwandigen Begrenzung der Führungs- und Auslaufkanäle 13 und der Abwesenheit von Strahlteilungssieben zu seinem Inneren nur in geringem Masse zur Verkalkung. Zur weiteren Verbesserung des Verkalkungsverhaltens ist bei der rechts gezeigten Ausführungsform vorgesehen, die Trennwände 14 und die einstückig mit diesen verbundenen Zertegeeinrichtungen 12 aus einem relativ weichen Kunststoff mit einer Shore A-Härte von ca. 70 bis 80 zu fertigen, beispielsweise einem entsprechenden Silikonelastomer. Material dieser Härte verleiht den Bauelementen im Bereich der im Querschnitt breiteren Treppenabsätze eine ausreichende Stabilität, lässt es andererseits aber im Bereich der Austrittsöffnung 16 zu, dass die freien Enden der Führungshülsen 14, die in diesem Bereich beispielsweise mit einer Fingerspitze 25 gut zugänglich sind, manuell geringfügig verbogen werden können, wie es durch die Strichelung angedeutet ist. Hierdurch ist eine sehr einfache und wirkungsvolle Reinigungsmöglichkeit insbesondere im besonders verkalkungsempfindlichen Bereich der Austrittsöffnung 16 geschaffen, in dem bevorzugt Restwasser hängen bleibt, dort verdunstet und Kalkrückstände ablagert. Bei der manuell leicht möglichen Verbiegung der Trennwandenden platzt angelagerter Kalk ab oder löst sich zumindest soweit, dass bei der nächsten Durchspülung des Strahlbelüfters die losgelösten Kalkablagerungen ausgespült werden.

Die links der Bruchlinie gezeigte Ausführungsform löst das Problem der Verkalkung nicht primär durch eine erleichterte Reinigungsmöglichkeit, sondern dadurch, dass eine Kalkbildung von vorneherein durch spezielle Auslegung der Oberflächeneigenschaften der Trennwände im Bereich der Austrittsöffnung vermieden wird. Hierzu sind bei dieser Ausführungsform die Hülsen 14 vollständig mit einer ca. 10 µm dicken Beschichtung 20 überzogen, die im Beispiel aus Polytetrafluorethylen besteht und beispielsweise durch Tauchbeschichtung oder Besprühung der zu beschichtenden Teile aufgebracht sein kann. Durch die geschlossene Beschichtung 20 wird die gesamte, mit Wasser in Kontakt tretende Oberfläche der Hülsen 14, 17 wasserabstossend bzw. wasserabweisend, indem die Grenzflächenenergie gegenüber Wasser so heraufgesetzt wird, dass eine Benetzung der Oberfläche weitgehend unterbleibt. Damit perlt Restwasser nach Abstellen des Wasserhahnes weitgehend ab, wobei sich verbleibende kleine Tropfen bevorzugt an den tiefstgelegenen Stellen der Hülsen, in der Regel also auf der unteren Stirnfläche, sammeln. Nach Verdunstung des Wassers bleiben nur an den kleinflächigen Kontaktstellen zwischen Wasserperlen und Beschichtung Kalkreste, die zum einen aufgrund ihrer Lage ausserhalb der Wasserführungskanäle die Funktion des Wasserbelüfters nicht beeinträchtigen und andererseits aufgrund ihrer Aussenlage mühelos per Hand abgewischt werden können. Da die austrittsnahen Oberflächen der Wasserzerteilungs- und Wasserführungseinrichtung im Vergleich zu den Treppenabschnitten aufgrund leichteren Luftzutritts stärker verkalkungsgefährdet sind, kann es ausreichen, auch beispielsweise nur den Teil der zylindrischen Führungen 14 zu beschichten, den Bereich der Treppenabschnitte 22 bis 24 dagegen unbeschichtet zu belassen. Eine Beschichtung ist sowohl auf relativ harten, herkömmlichen Materialien, als auch auf erfindungsgemäss weichen Bauteilen ähnlich der rechten Ausführungsform möglich. So können die Bauteile beispielsweise aus einem gummielastischen Werkstoff bestehen, der mit einer wasserabstossenden dünnen Beschichtung versehen ist.

Anhand der Fign. 3 bis 5 werden andere Möglichkeiten einer praktischen und kostengünstigen Umsetzung erläutert. Der dort gezeigte Strahlregler 30 hat ein aufklappbares, hülsenförmiges Gehäuse 31, das sich aus zwei über Filmscharniere 32 gelenkig verbundenen Hülsenhälften 33, 34 zusammensetzt. Auch bei dieser Ausführungsform werden im verdeckt gezeigten oberen Bereich durch eine Lochplatte Einzelstrahlen erzeugt, die im Bereich einer Zerteilungs- und Belüftungseinrichtung 35 zerteilt, mit angesaugter Luft vermischt und anschliessend durch eine untere, runde Wasseraustrittsöffnung 36 abgegeben werden. Die Zerteilungseinrichtung 35 besteht im Wesentlichen aus mehreren hintereinander geschalteten Lagen von quer zur Durchströmungsrichtung parallel zueinander verlaufenden Stiften 37, die durch einander paarweise zugeordnete und bei zusammengeklappter Einrichtung miteinander fluchtende Stiftabschnitte gebildet sind. Die Stiftabschnitte sind jeweils einstückig mit den zugeordneten Hülsenhälften verbunden und stossen im zusammengeklappten Zustand über stirnseitige, komplementäre Haltekonturen aneinander. Die Formgebung und Dimensionierung des Strahlreglers 30 kann derjenigen des Strahlreglers der DE 196 42 055 entsprechen, dessen diesbezügliche Merkmale durch Bezugnahme zum Inhalt dieser Anmeldung gemacht werden.

Die Strahlformungseinrichtung dieses Wasserstrahlbelüfters neigt aufgrund der Abwesenheit von Sieben und auch wegen der Abwesenheit von Kreuzungspunkten zwischen Stiften nur wenig zur verkalkung. Die Verkalkungsneigung kann noch deutlich herabgesetzt werden, wenn zumindest die der Wasseraustrittsöffnung nahen Zerteilungsstifte 38, ggf. auch die in Strömungsrichtung vorgeschaltete Lage von Zerteilungsstiften 39, mit einem hydrophoben Überzug 40 überzogen sind, wie es in der vergrösserten Detailansicht in Fig. 4 schematisch gezeigt ist. Dieser nur wenige Mikrometer dicke Überzug 40, der beispielsweise aus Silikon oder Polytetrafluorethylen bestehen kann, kann nach dem Spritzgiessen der Hülsenteile 33, 34 beispielsweise durch Tauchbeschichtung der Hülsenhälften oder durch Besprühen aufgebracht werden. Die wasserabstossende Beschichtung 40 lässt eine Ansammlung von Restwasser im Bereich der Wasseraustrittsöffnung 36 nur in geringen Mengen zu, da sich Restwasser zu kugeligen Wasserperlen zusammenzieht und von den querschnittsrunden Stiften sehr leicht abtropft, ohne hängenzubleiben. Insbesondere werden Restwassertropfen vermieden, die bei unbehandelten Strahlbelüftern dieser Art brückenartig zwischen benachbarten Stiften einer Lage oder benachbarter Lagen hängenbleiben können.

Anhand von Fig. 3 und 5 ist beim Wasserstrahlbelüfter 30 die der Austrittsöffnung nächstliegende Stiftlage 38 um ca. 1 bis 1,5 mm gegenüber der Ebene der Wasseraustrittsöffnung 36 nach innen zurückversetzt. In den verbleibenden Freiraum ist ein den Querschnitt der Wasseraustrittsöffnung vollständig ausfüllendes Gitter 45 eingesetzt. Dieses ist bei der gezeigten Ausführungsform als gesondertes Bauteil hergestellt worden und wurde vor dem Zusammenklappen der Gehäusehälften 33, 34 eingesetzt. Bei fertig montiertem Gehäuse wird das Gitter 45 formschlüssig in einer geeigneten Aufnahme 46 gehalten und sitzt wackelfrei am unteren Gehäuseende. Ein Verschlussgitter oder dergleichen kann auch fest mit einem Gehäuse des Strahlbelüfters verbunden sein, beispielsweise durch Einspritzen der Gitterstruktur nach Fertigstellung des Gehäuses.

Das durch das Rechteck-Gitter 45 (Fig. 5) gebildete, durchströmbare Flächenelement bildet die der Wasseraustrittsöffnung 36 nächstliegende, mit Wasser in Berührung kommende Bauelementstruktur des Strahlbelüfters und dient damit bevorzugt als Sammelstelle für Restwasser. Restwasser wird durch das Gitter 45 insbesondere auch von der öffnungsnächsten Stiftlage 38 abgezogen, denn dort sich sammelnde Tropfen können einen Zwischenraum zum Gitter leicht überbrücken und sich nach unten zum Gitter "weiterhangeln". Zur Nutzung der erfindungsgemässen Vorteile kann ein derartiges Flächenelement zumindest im durchströmbaren Innenbereich aus einem weichen und/oder wasserabweisenden Material gefertigt oder mit einem solchen beschichtet sein. Die vorzugsweise grobmaschige Gitterstruktur kann der Durchströmungsgeometrie der Zerlegeund Mischeinrichtung angepasst sein und beispielsweise eine rechteckige (Fig. 5), rautenförmige, wabenförmige oder sternförmige Anordnung von Gitterstreben 47 aufweisen. Auch als Spiraleinsätze oder Lochscheiben ausgebildete Flächenelemente sind möglich.

Wenn das selbsttragende Flächenelement, wie bei der bevorzugten Ausführungsform gemäss Fig. 3, aus einem hinreichend weichen Material mit einer Härte von beispielsweise zwischen 50 und 80 Shore A hergestellt ist, so können Kalkrückstände, die sich bevorzugt an der freiliegenden Unterseite des Gitters bilden, durch Eindrücken des Gitters (Pfeil) und damit einhergehende Durchbiegung (gestrichelte Linien) zum Ablösen oder Abplatzen gebacht werden. Insbesondere bei weichen Gittern ist daher zweckmässig zwischen der durch die Stiftlage 38 gebildeten letzten, dem Gitter zugewandten Bauelementstruktur der Zerlege- und Führungseinrichtung und dem Gitter ein für die Durchbiegung ausreichender Freiraum 48 von ca. 0,5 bis 1 mm vorgesehen, der zweckmässig so bemessen sein kann, dass innenliegende Bauelemente als Anschlag zur Vermeidung einer unnötig starken, strukturgefährdenden Durchbiegung dienen können.

Bei einer nicht gezeigten Variante ist die tragende Gitterstruktur aus relativ hartem, biegesteifen Kunststoffmaterial gefertigt und anschliessend mit einem ca. 10 µm dicken Silikonharz-Überzug beschichtet worden. Dies verleiht dem Gitter eine wasserabweisende Oberfläche, an der Restwasser weitgehend abperlt und sich nur kleine Tropfen an der Gitterunterseite bilden. Die unteren Kanten des Gitters bzw. die Unterseite der Gitterstreben können mit Vorteil, wie bei der Ausführungsform nach Fig. 2, spitz auslaufend ausgebildet sein.

Die Erfindung schlägt insbesondere vor, bei Wasserstrahlbelüftern bzw. Perlatoren, gleich welcher Bauart, die normalerweise aus Kunststoff gefertigten Teile am unteren Austrittsende, wo sich Restwasser schwerkraftbedingt bevorzugt sammelt, mit einem weichen und/oder wasserabstossenden Überzug zu versehen. Als bevorzugte Materialien, die je nach Materialdicke sowohl hinreichend weich, insbesondere aber wasserabstossend sind, kommen das auch unter der Bezeichnung "Teflon" bekannte Polytetrafluorethylen, Silikonharz oder Silikonkautschuk oder andere Kunststoffe mit vergleichbaren Eigenschaften, insbesondere elastomere Thermoplasten, in Frage. Durch Verwendung derartiger Materialien zur Beschichtung austrittsnaher Bauelemente bei Wasserstrahlbelüftern wird eine äusserst kostengünstige Möglichkeit geschaffen, einen verbesserten Verkalkungsschutz für Wasserbelüfter zu erreichen.

## Patentansprüche

1. Wasserstrahlbelüfter zum Anschluss am Wasseraustrittsende einer Sanitärarmatur, insbesondere eines Wasserauslaufventils oder -mischers, mit einer Wassereintrittsöffnung, einer Wasseraustrittsöffnung sowie mit zwischen Wassereintrittsöffnung und Wasseraustrittsöffnung angeordneten Einrichtungen zur Zerlegung und Vermischung des einströmenden Wassers mit angesaugter Luft, wobei mindestens ein mit Wasser in Berührung kommendes Bauelement (14; 37) des Wasserstrahlbelüfters zumindest im Bereich der Wasseraustrittsöffnung eine weiche und/oder wasserabstoßende Oberfläche aufweist, **dadurch gekennzeichnet, dass** das mindestens eine Bauelement (14; 37) zumindest im Bereich der Wasseraustrittsöffnung (16; 36) eine Beschichtung (20; 40) aus einem weichen und/oder wasserabstoßenden Material aufweist, wobei das Material eine Härte im Bereich von ca. 20 bis ca. 80 Shore A aufweist, und eine in Wasseraustrittsrichtung weisende Unterkante des mindestens einen Bauelements (14;37) eine spitz auslaufende Unterkante (19) aufweist, welche aus dem Material der Beschichtung ausgebildet ist.

2. Wasserstrahlbelüfter nach Anspruch 1, **dadurch gekennzeichnet, dass** das mindestens ein Bauelement (14; 45) derart angeordnet oder anordenbar ist, dass zumindest der Bereich der weichen Oberfläche manuell zugänglich ist.

3. Wasserstrahlbelüfter nach Anspruch 1 oder 2, **dadurch gekennzeichnet, dass** das Material eine Härte im Bereich von ca. 50 bis 80 Shore A aufweist, wobei bei einem aus weichem Material hergestellten Bauelement die Härte vorzugsweise im Bereich von mehr als 60 Shore A, insbesondere um ca. 80 Shore A liegt.

4. Wasserstrahlbelüfter nach einem der vorhergehenden Ansprüche, **dadurch gekennzeichnet, dass** das die Oberfläche bildende weiche Material Silikonkautschuk oder Polytetrafluorethylen ist.

5. Wasserstrahlbelüfter nach einem der vorhergehenden Ansprüche, **dadurch gekennzeichnet, dass** das mindestens eine Bauelement (14; 37) zumindest im Bereich der Wasseraustrittsöffnung (16; 36) eine Beschichtung (20; 40) aus einem weichen und/oder wasserabstoßenden Kunststoff aufweist.

6. Wasserstrahlbelüfter nach einem der vorhergehenden Ansprüche, **dadurch gekennzeichnet, dass** bei einer Beschichtung mit einem wasserabstoßenden Material die Schichtdicke weniger als 0,1 mm beträgt, insbesondere zwischen ca. 1 µm und ca. 10µm, liegt.

7. Wasserstrahlbelüfter nach einem der vorhergehenden Ansprüche, **dadurch gekennzeichnet, dass** bei einer Beschichtung mit einem weichen Material die Schichtdicke der Beschichtung derart bemessen ist, dass die Beschichtung in sich bewegbar, insbesondere elastisch verformbar, ist, wobei vorzugsweise die Schichtdicke größer als 0,1 mm ist, insbesondere zwischen ca. 0,2 und ca. 0,4 mm, liegt.

8. Wasserstrahlbelüfter nach Anspruch 7, **dadurch gekennzeichnet, dass** das Material der Beschichtung eine Härte im Bereich von ca. 30 und ca. 50 Shore A aufweist.

9. Wasserstrahlbelüfter nach einem der Ansprüche 5 bis 8, **dadurch gekennzeichnet, dass** die Beschichtung, zumindest im Bereich der Oberfläche aus Silikonharz oder Polytetrafluorethylen besteht.

10. Wasserstrahlbelüfter nach einem der vorhergehenden Ansprüche, **dadurch gekennzeichnet, dass** ihm mindestens ein Bauelement (45) in Form eines im Bereich der Wasseraustrittsöffnung (36) angeordneten oder anordenbaren durchströmbaren Flächenelementes (45) zugeordnet ist, das eine weiche und/oder wasserabstoßende Oberfläche aufweist.

11. Wasserstrahlbelüfter nach Anspruch 10, **dadurch gekennzeichnet, dass** das Flächenelement ein Gitter (45) ist.

12. Wasserstrahlbelüfter nach Anspruch 10 oder 11, **dadurch gekennzeichnet, dass** das Flächenelement als lösbar mit dem Wasserstrahlbelüfter (30) verbindbarer, gesonderter Einsatz (45) ausgebildet ist.

13. Wasserstrahlbelüfter nach einem der Ansprüche 10 bis 12, **dadurch gekennzeichnet, dass** das Flächenelement vollständig aus einem weichen und/oder wasserabstoßenden Material, insbesondere aus einem geeigneten Kunststoff, vorzugsweise aus Silikon oder Polytetrafluorethylen, besteht.

## Claims

1. Water jet aerator for connection to the water outlet end of a sanitary fitting, in particular of a water outlet valve or mixer, having a water inlet opening, a water outlet opening, and with devices arranged between the water inlet opening and the water outlet opening for dispersing the incoming water and mixing it with sucked-in air, where at least one structural element (14; 37) of the water jet aerator coming into contact with water has a soft and/or water repellent surface at least in the region of the water outlet opening, **characterized in that** the at least one structural element (14; 37) has a coating (20; 40) of a soft and/or water repellent material at least in the region of the water outlet opening (16; 36), where the material has a hardness in the range from about 20 to about 80 Shore A, and a lower edge of the at least one structural element (14; 37) facing in the direction of the water outlet has a tapering bottom edge (19) which is made of the material of the coating.

2. Water jet aerator according to Claim 1, **characterized in that** the at least one structural element (14; 45) is arranged or can be arranged in such a way that at least the region of the soft surface is manually accessible.

3. Water jet aerator according to Claim 1 or 2, **characterized in that** the material has a hardness in the range of about 50 to 80 Shore A, where in the case of a structural element manufactured from soft material the hardness is preferably in the range of more than 60 Shore A, in particular about 80 Shore A.

4. Water jet aerator according to one of the preceding claims, **characterized in that** soft material forming the surface is silicone rubber or polytetrafluoroethylene.

5. Water jet aerator according to one of the preceding claims, **characterized in that** the at least one structural element (14; 37) has a coating (20; 40) of a soft and/or water-repellent plastic, at least in the region of the water outlet opening (16; 36).

6. Water jet aerator according to one of the preceding claims, **characterized in that** in the case of a coating with a water-repellent material, the thickness of the coating is less than 0.1 mm, in particular between about 1 µm and about 10 µm.

7. Water jet aerator according to one of the preceding claims, **characterized in that** in the case of a coating with a soft material, the thickness of the layer of coating is dimensioned such that the coating can move within itself, in particular can be elastically deformed, where the thickness of the layer is preferably greater than 0.1 mm, and in particular is between about 0.2 and about 0.4 mm.

8. Water jet aerator according to Claim 7, **characterized in that** the material of the coating has a hardness in the range between about 30 and about 50 Shore A.

9. Water jet aerator according to one of Claims 5 to 8, **characterized in that** the coating consists of silicone resin or polytetrafluoroethylene, at least in the region of the surface.

10. Water jet aerator according to one of the preceding claims, **characterized in that** at least one structural element (45) in the form of a surface element (45) through which water can flow is arranged or can be arranged in the region of the water outlet opening (36) and having a soft and/or water-repellent surface is assigned to it.

11. Water jet aerator according to Claim 10, **characterized in that** the surface element is a grille (45).

12. Water jet aerator according to Claim 10 or 11, **characterized in that** the surface element is designed as a separate insert (45) which can be connected detachably to the water jet aerator (30).

13. Water jet aerator according to one of Claims 10 to 12, **characterized in that** the surface element consists entirely of a soft and/or water-repellent material, in particular of a suitable plastic, preferably of silicone or polytetrafluoroethylene.

## Revendications

1. Aérateur de jet d'eau destiné à être raccordé à l'extrémité de sortie d'eau d'une robinetterie sanitaire, en particulier d'un robinet d'eau à bec ou mélangeur, avec un orifice d'entrée d'eau, un orifice de sortie d'eau ainsi que, disposés entre l'orifice d'entrée d'eau et l'orifice de sortie d'eau, des dispositifs pour fragmenter l'eau affluante et la mélanger avec de l'air aspiré, sachant qu'au moins un composant (14 ; 37) entrant en contact avec l'eau de l'aérateur de jet d'eau présente une surface souple et/ou hydrophobe au moins dans la zone de l'orifice de sortie d'eau, **caractérisé en ce que** l'au moins un composant (14 ; 37) présente un revêtement (20 ; 40) constitué d'un matériau souple et/ou hydrophobe au moins dans la zone de l'orifice de sortie d'eau (16 ; 36), sachant que le matériau présente une dureté dans la plage d'env. 20 à env. 80 Shore A, et qu'un bord inférieur de l'au moins un composant (14 ; 37) orienté dans le sens de sortie d'eau présente un bord inférieur (19) se terminant en pointe et constitué du matériau du revêtement.

2. Aérateur de jet d'eau selon la revendication 1, **caractérisé en ce que** l'au moins un composant (14 ; 45) est disposé ou peut être disposé de manière telle qu'au moins la zone de la surface souple est manuellement accessible.

3. Aérateur de jet d'eau selon la revendication 1 ou 2, **caractérisé en ce que** le matériau présente une dureté dans la plage d'env. 50 à 80 Shore A, sachant qu'en présence d'un composant fabriqué dans un matériau souple, la dureté se situe de préférence dans la plage supérieure à 60 Shore A, en particulier autour d'env. 80 Shore A.

4. Aérateur de jet d'eau selon l'une des revendications précédentes, **caractérisé en ce que** le matériau souple constituant la surface est du caoutchouc de silicone ou du polytétrafluoréthylène.

5. Aérateur de jet d'eau selon l'une des revendications précédentes, **caractérisé en ce que** l'au moins un composant (14 ; 37) présente au moins dans la zone de l'orifice de sortie d'eau (16 ; 36) un revêtement (20 ; 40) constitué d'une matière synthétique souple et/ou hydrophobe.

6. Aérateur de jet d'eau selon l'une des revendications précédentes, **caractérisé en ce qu'**en présence d'un revêtement avec un matériau hydrophobe, l'épaisseur de la couche est inférieure à 0,1 mm, en particulier comprise entre env. 1 µm et env. 10µm.

7. Aérateur de jet d'eau selon l'une des revendications précédentes, **caractérisé en ce qu'**en présence d'un revêtement avec un matériau souple, l'épaisseur de la couche du revêtement est dimensionnée de manière telle que le revêtement est en lui-même malléable, en particulier déformable par élasticité, sachant que de préférence l'épaisseur de la couche est supérieure à 0,1 mm, en particulier comprise entre env. 0,2 et env. 0,4 mm.

8. Aérateur de jet d'eau selon la revendication 7, **caractérisé en ce que** le matériau du revêtement présente une dureté dans la plage d'env. 30 à env. 50 Shore A.

9. Aérateur de jet d'eau selon l'une des revendications 5 à 8, **caractérisé en ce que** le revêtement est constitué au moins dans la zone de la surface de résine de silicones ou de polytétrafluoréthylène.

10. Aérateur de jet d'eau selon l'une des revendications précédentes, **caractérisé en ce que** lui est associé au moins un composant (45) sous forme d'un élément de surface (45) traversable par un fluide, placé ou pouvant être placé dans la zone de l'orifice de sortie d'eau (36) et présentant une surface souple et/ou hydrophobe.

11. Aérateur de jet d'eau selon la revendication 10, **caractérisé en ce que** l'élément de surface est une grille (45).

12. Aérateur de jet d'eau selon la revendication 10 ou 11, **caractérisé en ce que** l'élément de surface est conçu en tant qu'insert (45) distinct pouvant être relié de manière détachable à l'aérateur de jet d'eau (30).

13. Aérateur de jet d'eau selon l'une des revendications 10 à 12, **caractérisé en ce que** l'élément de surface est intégralement constitué d'un matériau souple et/ou hydrophobe, en particulier d'une matière synthétique adéquate, de préférence en silicone ou en polytétrafluoréthylène.
